# EUROPEAN PATENT APPLICATION

(11) **EP 4 502 043 A1**
(43) Date of publication of application: **05.02.2025**
(21) Application number: 23780405.9
(22) Date of filing: 27.03.2023
(51) Int. Cl.: C08L 23/26, C08C 19/34, C09D 5/00, C09D 5/02, C09D 123/36, C09J 123/36

(54) **MODIFIED POLYOLEFIN AQUEOUS DISPERSION**

(30) Priority: 29.03.2022 JP 2022054442
(71) Applicant: TOYOBO MC Corporation, Osaka 530-0001 (JP)
(72) Inventor: MIYAZAKI, Keitaro, Takasago-shi, Hyogo 676-0082 (JP); KASHIHARA, Kenji, Takasago-shi, Hyogo 676-0082 (JP); YAMANE, Atsushi, Takasago-shi, Hyogo 676-0082 (JP)
(74) Representative: Vossius & Partner Patentanwälte Rechtsanwälte mbB
(86) International application number: PCT/JP2023/012309
(87) International publication number: WO 2023/190396

(57) **Abstract**

The present invention relates to an aqueous dispersion of a modified polyolefin that exhibits excellent adherence (adhesion) and water resistance, as well as a high level of peel strength on a polyolefin substrate under baking conditions of 80°C for a short time, and have the following characteristics (I), (II), and (III): (I) a modified polyolefin (A) has a carboxyl group and an amide group; (II) the carboxyl group and the amide group of the modified polyolefin (A) are respectively derived from an α,β-unsaturated carboxylic anhydride (B) and an amino compound having at least one active hydrogen on a nitrogen atom (C), the amino compound (C) having an aliphatic hydrocarbon or aromatic hydrocarbon skeleton; and (iii) the aqueous dispersion contains a basic compound (D).

## Description

### Technical Field

The present invention relates to an aqueous dispersion of a modified polyolefin with excellent adherence to non-polar substrates even under low-temperature short-time baking conditions.

### Background Art

Polyolefin resins, such as polypropylene, are heavily used in automotive parts, films, and molded products because of their excellent properties and low cost. However, polyolefin resins are difficult to paint or bond because they are crystalline and have a non-polar surface.

Thus, modified polyolefins, such as acid-modified polyolefins and acid-modified chlorinated polyolefins, have been developed for painting or printing polyolefin resins and laminating and bonding films. In particular, environmentally and hygienically friendly, aqueous dispersion compositions of modified polyolefins are proposed (e.g., PTL 1 and 2).

However, aqueous dispersions require a large amount of heat to remove water by drying. This makes it difficult to use heat to melt resin and reduces the adherence of the resin to a substrate during low-temperature, short-time baking as compared to solvent-based dispersions, resulting in insufficient peel strength.

### Citation List

### Patent Literature

PTL 1: JPH08-176374A
PTL 2: JPH01-256549A

### Summary of Invention

### Technical Problem

The present invention provides an aqueous dispersion of a modified polyolefin that exhibits excellent adherence (adhesion) and water resistance, as well as a high level of peel strength, to a polyolefin substrate even under baking conditions of 80°C for a short time.

### Solution to Problem

The present inventors conducted extensive research to solve the problem and completed the present invention. Specifically, the present invention includes the following subject matter.
Item 1. An aqueous dispersion of a modified polyolefin having the following characteristics (I), (II), and (III):
   (I) a modified polyolefin (A) has a carboxyl group and an amide group;
   (II) the carboxyl group and the amide group of the modified polyolefin (A) are respectively derived from an α,β-unsaturated carboxylic anhydride (B) and an amino compound having at least one active hydrogen on a nitrogen atom (C), the amino compound (C) having an aliphatic hydrocarbon group or an aromatic hydrocarbon group; and
   (III) the aqueous dispersion contains a basic compound (D).
Item 2. The aqueous dispersion of a modified polyolefin according to Item 1, wherein the modified polyolefin (A) has a melting point of 85°C or lower as measured by differential scanning calorimetry.
Item 3. A paint for a polyolefin substrate, comprising the aqueous dispersion of a modified polyolefin of Item 1 or 2.
Item 4. An ink for a polyolefin substrate, comprising the aqueous dispersion of a modified polyolefin of Item 1 or 2.
Item 5. An adhesive for a polyolefin substrate, comprising the aqueous dispersion of a modified polyolefin of Item 1 or 2.
Item 6. A primer for a polyolefin substrate, comprising the aqueous dispersion of a modified polyolefin of Item 1 or 2.

### Advantageous Effects of Invention

The aqueous dispersion of a modified polyolefin of the present invention exhibits excellent adherence (adhesion) and water resistance, as well as a high level of peel strength to a polyolefin substrate under baking conditions of 80°C for a short time, and can therefore be suitably used in paints, inks, adhesives, sealants, or primers.

### Description of Embodiments

The present invention is described in detail below.

The present invention relates to an aqueous dispersion of a modified polyolefin having the following characteristics (I), (II), and (III):
(I) a modified polyolefin (A) has a carboxyl group and an amide group;
(II) the carboxyl group and the amide group of the modified polyolefin (A) are respectively derived from an α,β-unsaturated carboxylic anhydride (B) and an amino compound having at least one active hydrogen on a nitrogen atom (C), the amino compound (C) having an aliphatic hydrocarbon group or an aromatic hydrocarbon group; and
(III) the aqueous dispersion contains a basic compound (D).

### Modified Polyolefin (A)

The modified polyolefin resin (A) used in the present invention is preferably obtained, for example, by graft-copolymerizing at least one polyolefin selected from the group consisting of polypropylene, a propylene-α-olefin copolymer, polyethylene, an ethylene-α-olefin copolymer, poly-1-butene, and a 1-butene-α-olefin copolymer with an α,β-unsaturated carboxylic anhydride (B) and an amino compound having at least one active hydrogen on a nitrogen atom (C).

The propylene-α-olefin copolymer refers to a copolymer obtained by copolymerizing propylene as a main component with an α-olefin. Examples of α-olefins include α-olefins having 2 or 4 to 20 carbon atoms, such as ethylene, 1-butene, 1-pentene, 1-hexene, 1-heptene, 1-octene, 1-decene, 1-dodecene, 1-hexadecene, and 4-methyl-1-pentene. The content of the propylene component in the propylene-α-olefin copolymer is preferably 50 mol% or higher, and more preferably 70 mol% or higher. A content of the propylene component being 50 mol% or higher results in excellent adhesion to a polypropylene substrate.

The ethylene-α-olefin copolymer refers to a copolymer obtained by copolymerizing ethylene as a main component with an α-olefin. Examples of α-olefins include α-olefins having 3 to 20 carbon atoms, such as propylene, 1-butene, 1-pentene, 1-hexene, 1-heptene, 1-octene, 1-decene, 1-dodecene, 1-hexadecene, and 4-methyl-1-pentene. The content of the ethylene component in the ethylene-α-olefin copolymer is preferably 75 mol% or higher. A content of the ethylene component being 75 mol% or higher results in excellent adhesion to a polyethylene substrate.

The 1-butene-α-olefin copolymer refers to a copolymer obtained by copolymerizing 1-butene as a main component with an α-olefin. Examples of α-olefins include α-olefins having 2 or 3, or 5 to 20 carbon atoms, such as ethylene, propylene, 1-pentene, 1-hexene, 1-heptene, 1-octene, 1-decene, 1-dodecene, 1-hexadecene, and 4-methyl-1-pentene. The content of the 1-butene component in the 1-butene-α-olefin copolymer is preferably 65 mol% or higher. A content of the 1-butene component being 65 mol% or higher results in excellent adhesion to a polypropylene substrate or a poly-1-butene substrate.

The modified polyolefin (A) may further be modified by chlorination. The chlorinated polyolefin is preferably an acid-modified chlorinated polyolefin obtained by chlorinating the modified polyolefin described above. For a chlorinated modified polyolefin (A), the lower limit of the chlorine content is preferably 5 mass% or higher, more preferably 8 mass% or higher, even more preferably 10 mass% or higher, particularly preferably 12 mass% or higher, and most preferably 14 mass% or higher, from the viewpoint of solution stability and adhesion between the polyolefin substrate and a resin substrate or a metal substrate. A content of 5 mass% or higher results in excellent solution stability, facilitating emulsification. The upper limit is preferably 40 mass% or lower, more preferably 38 mass% or lower, even more preferably 35 mass% or lower, particularly preferably 32 mass% or lower, and most preferably 30 mass% or lower. A content of 40 mass% or lower is likely to impart a high level of crystallinity to a chlorinated polyolefin, thus increasing adhesive strength.

The chlorine content of the chlorinated polyolefin can be measured by titration in accordance with JIS K-7229-1995.

The modified polyolefin (A) in the present invention preferably has a melting point of 50°C or higher and 85°C or lower as measured with a differential scanning calorimeter ("DSC" below), more preferably 55°C or higher and 80°C or lower, and particularly preferably 60°C or higher and 75°C or lower. A melting point of 50°C or higher and 85°C or lower provides suitable film-forming properties and cohesive force due to crystallization under short-time baking conditions at 80°C, achieving excellent adhesion to a polyolefin substrate, excellent water resistance, and excellent peel strength.

In the present invention, the melting point can be measured with a DSC in accordance with JIS K7121-2012, for example, under the following conditions. With a DSC meter (manufactured by Seiko Instruments Inc.), about 5 mg of a sample is maintained in a heated and melted state at 150°C for 10 minutes and then cooled at a rate of 10°C/minute until the sample is stabilized and maintained at -50°C. Thereafter, the sample is further heated at a rate of 10°C/minute to 150°C, and the peak melting temperature at which the sample is melted is measured and evaluated as the melting point. The melting points in the Examples described below were measured under these conditions.

### α,β-Unsaturated Carboxylic Anhydride (B)

It is preferred that the carboxyl group of the modified polyolefin (A) of the present invention be derived from the α,β-unsaturated carboxylic anhydride (B) and graft-copolymerized with a polyolefin. Examples of α,β-unsaturated carboxylic anhydrides include maleic anhydride, citraconic anhydride, itaconic anhydride, aconitic anhydride, and himic anhydride. Of these, maleic anhydride and itaconic anhydride are preferred.

When an α,β-unsaturated carboxylic anhydride (b) is polymerized with a polyolefin (a), the content of the α,β-unsaturated carboxylic anhydride (b) is preferably 0.5 to 10 mass% per 100 parts by mass of an acid-modified polyolefin composed of the polyolefin (a) modified with the α,β-unsaturated carboxylic anhydride (b). The content of the α,β-unsaturated carboxylic anhydride (b) is more preferably 0.7 mass% or higher. The content of the α,β-unsaturated carboxylic anhydride (b) is also more preferably 3 mass% or lower, and even more preferably 2 mass% or lower. A content of the α,β-unsaturated carboxylic anhydride (b) within this range facilitates phase inversion emulsification of the polyolefin resin (A), resulting in excellent adherence and peel strength of the coating film obtained from an aqueous resin composition containing the polyolefin resin (A). When the α,β-unsaturated carboxylic anhydride (B) is polymerized with a polyolefin, the content of the α,β-unsaturated carboxylic anhydride (B) component is preferably 0.5 to 10 mass% per 100 parts by mass of a modified polyolefin composed of the polyolefin modified with the α,β-unsaturated carboxylic anhydride (B). The content of the α,β-unsaturated carboxylic anhydride (B) component is more preferably 0.7 mass% or higher. The content of the α,β-unsaturated carboxylic anhydride (B) component is also more preferably 3 mass% or lower, and even more preferably 2 mass% or lower. A content of the α,β-unsaturated carboxylic anhydride component being 0.5 to 10 mass% facilitates phase inversion emulsification, resulting in excellent adherence and peel strength of the coating film obtained from the aqueous dispersion.

Examples of the method for graft-copolymerizing a polyolefin with the α,β-unsaturated carboxylic anhydride (B) include known methods, such as a method in which a polyolefin is heated to a temperature equal to or higher than the melting point in the presence of a radical generator to cause a reaction (melt method) and a method in which a polyolefin is dissolved in an organic solvent and then heated and stirred in the presence of a radical generator to cause a reaction (solution method).

### Amino Compound (C)

The amide group of the modified polyolefin (A) of the present invention is derived from the amino compound (C), and it is preferred that a structure derived from the amino compound (C) is added via the carboxyl group of the modified polyolefin (A).

The content of the amino compound (C) in the modified polyolefin (A) is preferably 0.5 to 15 mass%. The content of the amino compound (C) is more preferably 0.7 mass% or higher, and is also more preferably 12 mass% or lower, and even more preferably 10 mass% or lower. A content of the amino compound (C) being 0.5 to 15 mass% can improve adherence and phase inversion emulsification into water in a well-balanced manner.

The amino compound (C) used in the present invention contains an aliphatic hydrocarbon group or an aromatic hydrocarbon group. The amino compound (C) also contains at least one active hydrogen atom on a nitrogen atom. Examples include primary and secondary amines containing an aliphatic hydrocarbon group, such as methylamine, dimethylamine, ethylamine, diethylamine, n-propylamine, di(n-propyl)amine, isopropylamine, diisopropylamine, n-butylamine, di(n-butyl)amine, n-hexylamine, di(n-hexyl)amine, n-octylamine, di(n-octyl)amine, di-2-ethylhexylamine, di(2-ethylhexyl)amine, cyclohexylamine, dicyclohexylamine, laurylamine, oleylamine, beef tallow amine, and di-beef tallow amine; primary and secondary amines containing an aromatic hydrocarbon group, such as benzylamine and dibenzylamine; and heteroatom-containing amines, such as morpholine.

The amino compound (C) has a hydrocarbon group structure. The hydrocarbon group is a linear, branched, or cyclic alkyl group or an aromatic group. Typically, the number of carbon atoms in the hydrocarbon group is preferably 2 or more, with the upper limit being preferably 22 or less, and more preferably 20 or less. If the number of carbon atoms is 2 or more and 22 or less, the adherence and phase inversion emulsification into water can be improved in a well-balanced manner.

It is preferred that the amino compound (C) does not contain a hydrophilic polymer, or that when the amino compound (C) contains a hydrophilic polymer, the proportion of the amino compound containing a hydrophilic polymer is preferably 10 mass% or lower based on the total amount of the amino compound (C) contained in the modified polyolefin (A). In this case, while a hydrophilic polymer has a high affinity for water and thus facilitates phase inversion emulsification, the hydrophilic polymer decreases affinity for non-polar substrates, thus possibly reducing adherence and water resistance. The amount of the amino compound (C) is more preferably 5 mass% or lower, and even more preferably 3 mass% or lower, based on the total amount of the amino compound (C) contained in the modified polyolefin (A) .

In the present invention, the hydrophilic polymer refers to a polymer that contains 1 wt% or lower of insoluble matter when dissolved in water at 25°C at a concentration of 10 wt%. Examples of hydrophilic polymers include, but are not particularly limited to, poly(meth)acrylic resins, polyether resins, polyvinyl alcohol resins, and polyvinylpyrrolidone resins.

The amino compound (C) has one or two active hydrogens on a nitrogen atom, and preferably one active hydrogen. When the number of active hydrogens is one or two, the formation of imide bonds in the reaction with the α,β-unsaturated carboxylic anhydride (B) is further suppressed, which facilitates phase inversion emulsification.

When the amino compound (C) having two active hydrogens is used, the formation of imide bonds can be suppressed by lowering the reaction temperature. The reaction temperature is preferably 60°C or higher and 100°C or lower, and more preferably 70°C or higher and 80°C or lower.

The carboxyl group and the amide group of the modified polyolefin (A) are respectively derived from the α,β-unsaturated carboxylic anhydride (B) and the amino compound having at least one active hydrogen on a nitrogen atom (C). The modified polyolefin (A) preferably has a structure in which a structure derived from the α,β-unsaturated carboxylic anhydride (B) is grafted to a polyolefin, and a structure derived from the amino compound (C) is added via the carboxyl group derived from the α,β-unsaturated carboxylic anhydride (B). Due to this structure, the modified polyolefin (A) has even better adherence and peel strength because the structure derived from the amino compound has a higher affinity for non-polar substrates than dicarboxylic acid that is usually generated during dispersion in water.

The carboxyl group and the amide group in the modified polyolefin (A) of the present invention can be confirmed by infrared absorption spectroscopy. First, the modified polyolefin (A) was dissolved in an organic solvent to obtain a solution. Second, the solution was applied to a KBr plate and dried to form a thin film, followed by observing an infrared absorption spectrum at 400 to 4000 cm-1 with an FT-IR (e.g., FT/IR-4100, manufactured by JASCO Corporation). The analysis was performed using accompanying software (e.g., Spectro Manager, JASCO Corporation). The peak appearing at a wave number of 1600 to 1700 cm-1 was attributed to the C=O stretching vibration derived from the amide group, and the peak appearing at a wave number of 1700 to 1750 cm-1 was attributed to the C=O stretching vibration derived from the carboxyl group. At the same time, the C=O stretching vibration peak derived from the acid anhydride at around a wave number of 1780 cm-1 was confirmed to have decreased or disappeared.

The weight average molecular weight of the modified polyolefin (A) is preferably 15,000 to 300,000, more preferably 30,000 to 150,000, even more preferably 30,000 to 120,000, and particularly preferably 50,000 to 120,000. A weight average molecular weight within these ranges increases the ease of phase inversion emulsification, adherence, and peel strength in a well-balanced manner.

The modified polyolefin (A) may further be graft-modified with a radically polymerizable monomer. Specifically, the modifying component may contain a radically polymerizable monomer in addition to the α,β-unsaturated carboxylic anhydride (B) and the amino compound (C).

The radically polymerizable monomer includes a (meth)acrylic compound and a vinyl compound. The (meth)acrylic compound refers to a compound containing at least one (meth)acryloyl group (meaning an acryloyl group and/or a methacryloyl group) in the molecule. Examples of radically polymerizable monomers include (meth)acrylic acid, methyl (meth)acrylate, ethyl (meth)acrylate, n-butyl (meth)acrylate, cyclohexyl (meth)acrylate, hydroxyethyl (meth)acrylate, isobornyl (meth)acrylate, glycidyl (meth)acrylate, octyl (meth)acrylate, lauryl (meth)acrylate, tridecyl (meth)acrylate, stearyl (meth)acrylate, benzyl (meth)acrylate, phenyl (meth)acrylate, dimethylaminoethyl (meth)acrylate, diethylaminoethyl (meth)acrylate, hydroxyethyl (meth)acrylate, 2-hydroxyethyl (meth)acrylate, N,N-dimethylaminoethyl (meth)acrylate, acetoacetoxyethyl (meth)acrylate, N-methyl(meth)acrylamide, N-ethyl(meth)acrylamide, N-propyl(meth)acrylamide, N-isopropyl(meth)acrylamide, N-butyl(meth)acrylamide, N-isobutyl(meth)acrylamide, N-t-butyl(meth)acrylamide, N,N-dimethyl (meth)acrylamide, N,N-dimethylaminopropyl(meth)acrylamide, N,N-methylene-bis(meth)acrylamide, N-methylol(meth)acrylamide, hydroxyethyl(meth)acrylamide, (meth)acryloylmorpholine, n-butyl vinyl ether, 4-hydroxybutyl vinyl ether, and dodecyl vinyl ether. Of these, methyl (meth)acrylate, ethyl (meth)acrylate, cyclohexyl (meth)acrylate, and lauryl (meth)acrylate are preferred; of these, these methacrylates are more preferred. These may be used alone or in a combination of two or more, and the mixing ratio may be freely set.

### Basic Compound (D)

The aqueous dispersion of a modified polyolefin of the present invention contains a basic compound (D). It is preferable to neutralize the carboxyl groups of the modified polyolefin (A) with the basic compound (D) to disperse the modified polyolefin (A) in water. For example, when the modified polyolefin (A) is subjected to phase inversion emulsification, a basic compound is allowed to be present together. The presence of a basic compound in the system can improve the dispersibility of the modified polyolefin (A). Examples of the basic compound (D) include inorganic basic compounds, such as sodium hydroxide, potassium hydroxide, sodium carbonate, potassium carbonate, and ammonium carbonate; amines, such as triethylamine, N,N-dimethylethanolamine, aminoethanolamine, N-methyl-N,N-diethanolamine, isopropylamine, iminobispropylamine, ethylamine, diethylamine, 3-ethoxypropylamine, 3-diethylaminopropylamine, sec-butylamine, propylamine, methylaminopropylamine, allylamine, diallylamine, methyliminobispropylamine, 3-methoxypropylamine, monoethanolamine, diethanolamine, triethanolamine, morpholine, N-methylmorpholine, N-ethylmorpholine, 2-amino-2-methyl-1-propanol, and 2-dimethylamino-2-methyl-1-propanol; and ammonia.

The content of the basic compound (D) is preferably 0.3 to 4.0 times the chemical equivalent, and more preferably 0.7 to 2.5 times the chemical equivalent, relative to the carboxyl groups of the modified polyolefin (A). If the amount of the basic compound (D) added is less than 0.3 times the chemical equivalent, the effect of the basic compound may not be achieved. On the other hand, if the amount of the basic compound (D) exceeds 4.0 times the chemical equivalent, the amount of the basic compound (D) remaining in the dried product of the composition for intended use may be too large.

The basic compound (D) is contained in an amount of preferably 0.1 parts by mass or more, more preferably 0.3 parts by mass or more, and even more preferably 0.5 parts by mass or more, per 100 parts by mass of the aqueous dispersion of a modified polyolefin. The basic compound (D) is also contained in an amount of more preferably 2 parts by mass or less, and even more preferably 1 part by mass or less. In this case, the modified polyolefin (A) can have improved dispersibility, and the particle size of the dispersed particles does not become too large, resulting in excellent storage stability, with the amount of the basic compound (D) remaining in a dried product being preferable.

### Method for Producing Aqueous Dispersion of Modified Polyolefin

The method for producing the aqueous dispersion of a modified polyolefin in the present invention is not particularly limited, but is preferably a phase inversion emulsification method, in which the carboxyl groups in the modified polyolefin (A) are neutralized with the basic compound (D) in an organic solvent, and an aqueous medium is added, followed by heating and stirring the mixture, after which the mixture is cooled, and then the organic solvent is removed.

The solids concentration of the aqueous dispersion of a resin composition of the present invention is preferably 10 to 60 mass%, more preferably 20 to 50 mass%, and even more preferably 30 to 40 mass%, based on the total amount of the aqueous dispersion, from the viewpoint of handling of the aqueous dispersion. This achieves excellent stability of the aqueous dispersion of a modified polyolefin and excellent adhesion of the aqueous dispersion of a modified polyolefin to an olefin substrate.

### Surfactant

The aqueous dispersion of a modified polyolefin of the present invention may contain a surfactant to the extent that the surfactant does not impair the performance of the present invention. The surfactant includes a nonionic surfactant, an anionic surfactant, a cationic surfactant, and an amphoteric surfactant. Of these, from the viewpoints of particle size of dispersed particles and water resistance of the coating film obtained from the target composition, it is preferable to use a nonionic surfactant or anionic surfactant, and it is more preferable to use a nonionic surfactant.

Examples of nonionic surfactants include polyoxyethylene alkyl ethers, polyoxypropylene alkyl ethers, polyoxyethylene alkyl phenyl ethers, polyoxypropylene alkyl phenyl ethers, polyoxyethylene styrenated phenyl ethers, polyoxypropylene styrenated phenyl ethers, polyoxyethylene fatty acid esters, polyoxypropylene fatty acid esters, polyoxyethylene sorbitan fatty acid esters, polyoxypropylene sorbitan fatty acid esters, polyoxyethylene alkylamine ethers, polyoxypropylene alkylamine ethers, polyoxyethylene lanolin alcohol ethers, polyoxypropylene lanolin alcohol ethers, polyoxyethylene lanolin fatty acid esters, polyoxypropylene lanolin fatty acid esters, and (polyoxyethylene oxypropylene) block copolymers. Examples of such compounds include the Emulmin series (manufactured by Sanyo Chemical Industries, Ltd.), Noigen series (manufactured by DKS Co., Ltd.), and Blaunon series (manufactured by Aoki Oil Industrial Co., Ltd.).

For these nonionic surfactants, reactive surfactants having a polymerizable double bond in the molecules are also usable. Examples of such surfactants include ADEKA REASOAP ER-10, ER-20, ER-30, and ER-40 (all manufactured by ADEKA Corporation).

Examples of anionic surfactants include higher alkyl sulfates, alkylaryl polyoxyethylene sulfuric ester salts, higher fatty acid salts, alkylaryl sulfonic acid salts, and alkyl phosphoric ester salts. Examples of such surfactants include Neocol series and Hitenol series (manufactured by DKS Co. Ltd.).

For these anionic surfactants, reactive surfactants having a polymerizable double bond in the molecules are also usable. Examples of such surfactants include ADEKA REASOAP NE-10, NE-20, NE-30, NE-40, and SE-10N (all manufactured by ADEKA Corporation), AQUALON RN-20, RN-30, RN-50, HS-10, and HS-20 (all manufactured by DKS Co. Ltd.), and ELEMINOL JS-2 and ELEMINOL RS-30 (all manufactured by Sanyo Chemical Industries, Ltd.).

These surfactants may be used alone or in a combination of two or more.

In the present invention, the surfactant is preferably used in an amount of 5 to 60 parts by mass per 100 parts by mass of the modified polyolefin (A) from the viewpoint of ease of phase inversion emulsification and water resistance of resulting coating films. The surfactant is more preferably used in an amount of 40 parts by mass or less, even more preferably 30 parts by mass or less, and particularly preferably 25 parts by mass or less.

The Z-average particle size of the resin particles in the aqueous dispersion of a modified polyolefin obtained as described above is preferably 10 nm or more and 500 nm or less, more preferably 200 nm or less, and even more preferably 150 nm or less. The Z-average particle size of the resin particles in the aqueous dispersion of a modified polyolefin obtained is also more preferably 65 nm or more, and even more preferably 70 nm or more. A Z-average particle size exceeding 500 nm is not preferable because it may cause defects in the coating film after coating and adversely affect various physical properties, making it difficult to use the aqueous dispersion particularly in a top coat paint.

The aqueous dispersion of a modified polyolefin of the present invention can be used as a clear varnish as is; however, for the purpose of further improving coating film performance, such as film-formability, coating film hardness, weather resistance, and flexibility, various coating additives may be added to the extent that the adherence to a polyolefin substrate is not impaired. For example, film-forming aids such as propylene glycol monopropyl ether, dipropylene glycol monomethyl ether, and butyl propylene diglycol, antifoaming agents, anti-sagging agents, wetting agents, and ultraviolet absorbers may be used.

Additionally, the aqueous dispersion of a modified polyolefin of the present invention may optionally contain a tackifier, such as an aqueous dispersion of rosin, dammar, polymerized rosin, hydrogenated rosin, ester rosin, rosin-modified maleic acid resin, polyterpene resin, petroleum resin, cyclopentadiene resin, phenol resin, xylene resin, coumarone-indene resin, or the like, to improve drying properties of the coating film and adherence to a polyolefin substrate. The amount of the tackifier added on a solids basis is preferably 5 to 100 parts by mass and more preferably 10 to 50 parts by mass, per 100 parts by mass of the solid content of the aqueous dispersion of a modified polyolefin. If the amount added is less than 5 parts by mass, the effect of adding the additive may not be achieved. On the other hand, if the amount exceeds 100 parts by mass, the overly too large amount may decrease adherence.

The aqueous dispersion of a modified polyolefin of the present invention can be suitably used in paints, inks, adhesives, sealants, primers, etc. for various polyolefin substrates, including polypropylene. However, the substrates are not limited to these substrates, and the aqueous dispersion can be applied to other substrates, such as other types of plastics, wood, or metals. Examples of polyolefin substrates include films, sheets, and molded articles. The coating method is not particularly limited.

### Examples

The following describes the present invention in detail with reference to Examples. However, the present invention is not limited to these Examples.

### (1) Measurement of Weight Average Molecular Weight by High-temperature GPC

The measurement was performed by using orthodichlorobenzene as a solvent at 140°C with a GPC150-C Plus (manufactured by Waters Corporation; column: GMH6-HT + GMH6-HTL manufactured by Tosoh Corporation). The weight average molecular weight was calculated based on polystyrene of known molecular weight as the standard substance.

### (2) Measurement of Melting Point by Differential Scanning Calorimeter (DSC)

In accordance with JIS K7121-2012, with a DSC meter (manufactured by Seiko Instruments Inc.), about 5 mg of a sample was maintained in a heated and melted state at 150°C for 10 minutes and then cooled at a rate of 10°C/minute until the sample was stabilized and maintained at -50°C. Thereafter, the sample was further heated at a rate of 10°C/minute to 150°C, and the peak melting temperature at which the sample was melted was measured and evaluated as the melting point.

### (3) Measurement of Z-average Particle Size (simply "average particle size" below)

The average particle size (Z-average particle size) was measured based on intensity distribution according to dynamic light scattering by using a Zetasizer Nano-ZS Model ZEN3600 (manufactured by Malvern). A sample of an aqueous dispersion composition having a solids content adjusted to a concentration of 0.05 g/L was measured at 25°C three times, and the average was determined.

### Production Example 1

280 g of a propylene-α-olefin copolymer (propylene content: 70 mol%), 15 g of maleic anhydride as an α,β-unsaturated carboxylic anhydride (B), 7 g of dicumyl peroxide, and 420 g of toluene were added to an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. The resulting resin was dried under reduced pressure to obtain a solid of acid-modified polyolefin (PO-1). The results of infrared absorption spectroscopy indicated that the content of maleic anhydride was 1.1 mass%. The weight average molecular weight measured by high-temperature GPC was 90,000, and the melting point measured by DSC was 70°C.

### Production Example 2

The solid of acid-modified polyolefin (PO-2) was obtained in the same manner as in Production Example 1, except that the starting material resin was a propylene-α-olefin copolymer with a propylene content of 80 mol%. The results of infrared absorption spectroscopy indicated that the content of maleic anhydride was 1.1 mass%. The weight average molecular weight measured by high-temperature GPC was 90,000, and the melting point measured by DSC was 82°C.

### Production Example 3

The solid of acid-modified polyolefin (PO-3) was obtained in the same manner as in Production Example 1, except that the starting material resin was a propylene-α-olefin copolymer with a propylene content of 85 mol%. The results of infrared absorption spectroscopy indicated that the content of maleic anhydride was 1.1 mass%. The weight average molecular weight measured by high-temperature GPC was 90,000, and the melting point measured by DSC was 90°C.

### Production Example 4

280 g of a propylene-α-olefin copolymer (propylene content: 94 mol%), 14 g of maleic anhydride as an α,β-unsaturated carboxylic anhydride (B), 5.6 g of dicumyl peroxide, and 420 g of toluene were added to an autoclave equipped with a stirrer, which was then purged with nitrogen for about 5 minutes. Thereafter, a reaction was performed at 140°C for 5 hours with heating and stirring. After the reaction was completed, the reaction solution was poured into a large amount of methyl ethyl ketone to precipitate a resin. The resin was further washed with methyl ethyl ketone several times to remove unreacted maleic anhydride. After drying under reduced pressure, 280 g of the resulting maleic anhydride-modified polyolefin and 2520 g of chloroform were added to an autoclave equipped with a stirrer, which was then purged with nitrogen for about 5 minutes. Thereafter, the autoclave was heated to 110°C to fully dissolve the resin. Subsequently, 1.4 g of tert-butylperoxy-2-ethylhexanoate was added, and a predetermined amount of chlorine gas was blown into the autoclave. The reaction solvent, chloroform, was distilled off under reduced pressure, and the residue was dried, thereby obtaining a solid of acid-modified chlorinated polyolefin with a chlorine content of 21 mass%, a weight average molecular weight of 80,000, a melting point of 70°C as measured by DSC, and a maleic anhydride content of 1.5 mass% (CPO-1).

### Example 1: Production of Aqueous Dispersion of Modified Polyolefin (a)

100 g of the acid-modified polyolefin resin (PO-1) obtained in Production Example 1 and 60 g of toluene were placed in an autoclave equipped with a stirrer. After purging with nitrogen for about 5 minutes, the mixture was heated and dissolved at 100°C for 30 minutes. Thereafter, 2.2 g of diethylamine was added as the amino compound (C), and the mixture was reacted at 110°C for 2 hours while being heated and stirred. After cooling, a portion of the reaction solution was taken out and separated from the unreacted material and purified. Infrared absorption spectroscopy was then performed. The spectrum at around 1780 cm-1 derived from the acid anhydride disappeared, and peaks derived from the amide group and carboxyl group were confirmed at 1647 cm-1 and 1718 cm-1, respectively. The weight average molecular weight of the modified polyolefin was 90000, and the melting point was 70°C as measured by DSC. Subsequently, 20 g of polyoxyethylene cetyl ether (manufactured by NOF Corporation, product name: Nonion P-210, a nonionic surfactant) and 60 g of isopropyl alcohol were added to the autoclave in a nitrogen atmosphere, and the mixture was heated and stirred at 90°C for 30 minutes, followed by adding 500 g of ion-exchanged water warmed to 90°C. After the reaction mixture was stirred for 20 minutes while being maintained at 90°C, 2.5 g of N,N-dimethylethanolamine was added, followed by stirring for 15 minutes. Thereafter, the emulsion was heated and stirred for 1 hour and cooled to 60°C, followed by removing the solvent under reduced pressure, thereby obtaining an aqueous dispersion (a) with a resin concentration (solid content) of 30 mass% and an average particle size of resin particles of 70 nm.

### Example 2: Production of Aqueous Dispersion of Modified Polyolefin (b)

A modified polyolefin (weight average molecular weight: 90000, melting point by DSC: 70°C) was obtained in the same manner as in Example 1, except that the type and amount of each component were changed as shown in Table 1. Further, an aqueous dispersion (b) with a resin concentration (solid content) of 30 mass% and an average particle size of resin particles of 140 nm was obtained. Infrared absorption spectroscopy revealed that the spectrum derived from the acid anhydride at around 1780 cm-1 disappeared, and peaks derived from the amide group and the carboxyl group were present at 1645 cm-1 and 1714 cm-1, respectively.

### Example 3: Production of Aqueous Dispersion of Modified Polyolefin (c)

A modified polyolefin (weight average molecular weight: 90000, melting point by DSC: 70°C) was obtained in the same manner as in Example 1, except that the type and amount of each component were changed as shown in Table 1. Further, an aqueous dispersion (c) with a resin concentration (solid content) of 30 mass% and an average particle size of resin particles of 95 nm was obtained. Infrared absorption spectroscopy revealed that the spectrum derived from the acid anhydride at around 1780 cm-1 disappeared, and peaks derived from the amide group and carboxyl group were present at 1655 cm-1 and 1703 cm-1, respectively.

### Example 4: Production of Aqueous Dispersion of Modified Polyolefin (d)

A modified polyolefin (weight average molecular weight: 90000, melting point by DSC: 70°C) was obtained in the same manner as in Example 1, except that the type and amount of each component and the reaction temperature were changed as shown in Table 1. Further, an aqueous dispersion (d) with a resin concentration (solid content) of 30 mass% and an average particle size of resin particles of 105 nm was obtained. Infrared absorption spectroscopy revealed that the spectrum derived from the acid anhydride at around 1780 cm-1 disappeared, and peaks derived from the amide group and carboxyl group were present at 1643 cm-1 and 1708 cm-1, respectively.

### Example 5: Production of Aqueous Dispersion of Modified Polyolefin (e)

A modified polyolefin (weight average molecular weight: 90000, melting point by DSC: 82°C) was obtained in the same manner as in Example 1, except that the type and amount of each component were changed as shown in Table 1. Further, an aqueous dispersion (e) with a resin concentration (solid content) of 30 mass% and an average particle size of resin particles of 105 nm was obtained. Infrared absorption spectroscopy revealed that the spectrum derived from the acid anhydride at around 1780 cm-1 disappeared, and peaks derived from the amide group and carboxyl group were present at 1645 cm-1 and 1714 cm-1, respectively.

### Example 6: Production of Aqueous Dispersion of Modified Polyolefin (f)

A modified polyolefin (weight average molecular weight: 80000, melting point by DSC: 70°C) was obtained in the same manner as in Example 1, except that the type and amount of each component and the reaction temperature were changed as shown in Table 1. Further, an aqueous dispersion (f) with a resin concentration (solid content) of 30 mass% and an average particle size of resin particles of 110 nm was obtained. Infrared absorption spectroscopy revealed that the spectrum derived from the acid anhydride at around 1780 cm-1 derived disappeared, and peaks derived from the amide group and the carboxyl group were present at 1645 cm-1 and 1714 cm-1, respectively.

### Comparative Example 1: Production of Aqueous Dispersion of Modified Polyolefin (g)

In a 2 L four-necked flask equipped with a condenser, a thermometer, a stirrer, and a dropping funnel, 100 g of the acid-modified polyolefin obtained in Production Example 1, 60 g of toluene, 60 g of isopropyl alcohol, and 20 g of polyoxyethylene cetyl ether (manufactured by NOF Corporation, trade name: Nonion P-210, a nonionic surfactant) were placed and thoroughly dissolved while the temperature was kept at 100°C. Then, 4.0 g of N,N-dimethylethanolamine was added to this solution, and the mixture was stirred for 15 minutes. Subsequently, 500 g of deionized water that had been preheated to 90°C was added dropwise through the dropping funnel with intensive stirring over a period of 30 minutes to allow the acid-modified polyolefin to undergo phase inversion emulsion. The emulsion was cooled to 60°C, and the solvent was removed under reduced pressure to obtain an aqueous dispersion (g) with a resin concentration (solid content) of 30 mass% and an average particle size of resin particles of 65 nm.

### Comparative Example 2: Production of Aqueous Dispersion of Modified Polyolefin (h)

An aqueous dispersion (h) with a resin concentration (solid content) of 30 mass% and an average particle size of resin particles of 45 nm was obtained in the same manner as in Comparative Example 1, except that the type of each component was changed as shown in Table 1.

### Comparative Example 3: Production of Aqueous Dispersion of Modified Polyolefin (i)

A modified polyolefin (weight average molecular weight: 90000, melting point by DSC: 90°C) was obtained in the same manner as in Example 1, except that the type and amount of each component were changed as shown in Table 1. Further, an aqueous resin composition (i) with a resin concentration (solid content) of 30 mass% and an average particle size of resin particles of 85 nm was obtained. Infrared absorption spectroscopy revealed that the spectrum derived from the acid anhydride at around 1780 cm-1 disappeared, and peaks derived from the amide group and the carboxyl group were present at 1645 cm-1 and 1714 cm-1, respectively. Jeffamine (registered trademark) M-1000 (manufactured by HUNTSMAN Corporation) is an amino compound containing a hydrophilic polymer.

### Comparative Example 4: Production of Aqueous Dispersion of Modified Polyolefin (j)

The same procedure as in Example 1 was repeated, except that the type and amount of each component and the reaction temperature were changed as shown in Table 1. However, due to poor emulsification, an aqueous dispersion was not formed. Infrared absorption spectroscopy revealed that a peak derived from the acid anhydride at around 1780 cm-1 disappeared, and that a peak derived from the imide group was present at 1720 cm-1. No peaks derived from the carboxyl group and amide group were observed.

**Table 1**

| | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|
| Aqueous Dispersion of Modifled Polyolefin | | | a | b | c | d | e | f | g | h | i | j |
| Modified Polyolefin (A) (g) | Production Example 1 | PO-1 | 100.0 | 100.0 | 100.0 | 100.0 | - | - | 100.0 | - | - | 100.0 |
| | Production Example 2 | PO-2 | - | - | - | - | 100.0 | - | - | - | - | - |
| | Production Example 3 | PO-3 | - | - | - | - | - | - | - | - | 100.0 | - |
| | Production Example 4 | CPO-1 | - | - | - | - | - | 100.0 | - | 100.0 | - | - |
| | Melting Point (°C) | | 70 | 70 | 70 | 70 | 82 | 70 | 70 | 70 | 90 | 70 |
| Amino Compound (C) (g) | (C) | Diethylamine | 2.2 | - | - | - | - | - | - | - | - | - |
| | | Dibutylamine | - | 3.8 | - | - | 3.8 | 4.5 | - | - | - | - |
| | | Dibenzylamine | - | - | 5.9 | - | - | - | - | - | - | - |
| | | n-Butylamine | - | - | - | 2.2 | - | - | - | - | - | 2.2 |
| | | Jeffamine M-1000 | - | - | - | - | - | - | - | - | 11.0 | - |
| Amidation Reaction | Temperature | (°C) | 110 | 110 | 110 | 80 | 110 | 80 | - | - | 110 | 140 |
| | Time | (h) | 2 | 2 | 2 | 2 | 2 | 2 | - | - | 2 | 2 |
| Toluene (g) | | | 60.0 | 80.0 | 60.0 | 60.0 | 70.0 | 80.0 | 60.0 | 60.0 | 80.0 | - |
| Xylene (g) | | | - | - | - | - | - | - | - | - | - | 60.0 |
| Isopropyl Alcohol (g) | | | 60.0 | 40.0 | 60.0 | 60.0 | 70.0 | 40.0 | 60.0 | 60.0 | 80.0 | 60.0 |
| Neutralizing Amine (N,N-dimethylethanolamine) (g) | | | 2.5 | 2.5 | 2.5 | 2.5 | 2.5 | 3.3 | 4.0 | 6.0 | 2.5 | 2.5 |
| Deionized Water (g) | | | 500.0 | 500.0 | 500.0 | 500.0 | 500.0 | 500.0 | 500.0 | 500.0 | 500.0 | 500.0 |
| Average Particle Size (nm) | | | 70 | 140 | 95 | 105 | 105 | 110 | 65 | 45 | 85 | Poor Emulsification |

The aqueous dispersions of a modified polyolefin (a) to (j) obtained in Examples 1 to 6 and Comparative Examples 1 to 4 were evaluated for the following properties. Table 1 shows the results.

### (1) Adhesion

2 g of propylene glycol monomethyl ether as a film-forming aid and 2 g of Dynol 604 (manufactured by Air Products Japan, K.K.) as a wetting agent were added to 100 g of an aqueous dispersion of a modified polyolefin, and the mixture was stirred with a magnetic stirrer for 30 minutes. This emulsion was applied by spraying onto a polypropylene plate (manufactured by Nippon Testpanel Co., Ltd.) that had been washed with isopropyl alcohol so that the dry coating film thickness would be 10 µm. After drying at 80°C for 5 minutes, a protective film was formed by spraying with 2K urethane paint (Retan PG White III, manufactured by Kansai Paint Co., Ltd.) to give a thickness of 40 to 50 µm. After drying at 80°C for 5 minutes, the plate was left to stand for 24 hours in an atmosphere of 25°C and 60% relative humidity to prepare a test plate. A grid of 100 squares was made on this test plate with 1 mm intervals, reaching down to the base. Cellophane tape was pressed onto the squares and then peeled off at an angle of 90 degrees relative to the coated surface. This operation was performed three times. A coating film with no peeling was rated "A." A coating film that had peeled after the third try was rated "B." A coating film that had peeled after the first or second try was rated "C."

### (2) Water Resistance

A test plate obtained according to the method in section (1) above was immersed in warm water at 40°C for 240 hours, and then the adhesion was evaluated in the same manner as in section (1) above. The appearance of the coating film was examined to confirm whether blisters (lifting or swelling of the coating film) were present. A coating film with no peeling or blistering was rated "A." A coating film with no peeling but with blisters was rated "B." A coating film with peeling was rated "C."

### (3) Peel Strength

A test plate was prepared in the same manner as in section (1) above, except that a protective film was formed by spray-coating to give a thickness of 100 µm. The test plate was then left in an atmosphere of 25°C and 60% relative humidity for 48 more hours. The resulting plate was used as a test plate. Strip-shaped pieces were made at 1 cm intervals on the test plate and a peel test (50 mm, 180°) was performed at a rate of 50 mm/minute with a tensile tester (Tensilon RTG-1310, manufactured by A&D Company). The stress applied during pulling was regarded as the peel strength, and the average value of five tests was determined to be the measurement result. The evaluation results of peel strength were as follows:
A: 800 gf/cm or more
B: 600 gf/cm or more and less than 800 gf/cm
C: 500 gf/cm or more and less than 600 gf/cm
D: less than 500 gf/cm

**Table 2**

| | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| Aqueous Dispersion of Modified Polyolefin | | | a | b | c | d | e | f | g | h | i |
| Modified Polyolefin (A) (g) | Production Example 1 | PO-1 | 100.0 | 100.0 | 100.0 | 100.0 | - | - | 100.0 | - | - |
| | Production Example 2 | PO-2 | - | - | - | - | 100.0 | - | - | - | - |
| | Production Example 3 | PO-3 | - | - | - | - | - | - | - | - | 100.0 |
| | Production Example 4 | CPO-1 | - | - | - | - | - | 100.0 | - | 100.0 | - |
| | Melting Point (°C) | | 70 | 70 | 70 | 70 | 82 | 70 | 70 | 70 | 90 |
| Amino Compound (C) (g) | (C) | Diethylamine | 2.2 | - | - | - | - | - | - | - | - |
| | | Di-n-Butylamine | - | 3.8 | - | - | 3.8 | 4.5 | - | - | - |
| | | Dibenzylamine | - | - | 5.9 | - | - | - | - | - | - |
| | | n-Butylamine | - | - | - | 2.2 | - | - | - | - | - |
| | | Jeffamine M-1000 | - | - | - | - | - | - | - | - | 11.0 |
| PP Adhesion | | | A | A | A | A | A | A | A | A | B |
| Water Resistance | | | A | A | A | A | A | A | A | A | C |
| 180° Peel Strength (gf/cm) | | | 765 | 820 | 815 | 770 | 760 | 655 | 590 | 555 | 250 |
| | | | B | A | A | B | B | B | C | C | D |

### Discussion on the Results in Tables 1 and 2

As is clear from Tables 1 and 2, the aqueous resin compositions (a) to (f) obtained in Examples 1 to 6 above exhibited a high level of peel strength under baking conditions of 80°C for a short time, and were also excellent in adhesion and water resistance under baking conditions of 80°C for a short time. In contrast, Comparative Examples 1 and 2, in which the modified polyolefin (A) did not have an amide group, exhibited reduced peel strength as well as poor adhesion and poor water resistance to the polyolefin substrate. Comparative Example 4, in which the modified polyolefin (A) did not have a carboxyl group, exhibited poor emulsification.

## Claims

1. An aqueous dispersion of a modified polyolefin having the following characteristics (I), (II), and (III):
(I) a modified polyolefin (A) has a carboxyl group and an amide group;
(II) the carboxyl group and the amide group of the modified polyolefin (A) are respectively derived from an α,β-unsaturated carboxylic anhydride (B) and an amino compound having at least one active hydrogen on a nitrogen atom (C), the amino compound (C) having an aliphatic hydrocarbon group or an aromatic hydrocarbon group; and
(III) the aqueous dispersion contains a basic compound (D).

2. The aqueous dispersion of a modified polyolefin according to claim 1, wherein the modified polyolefin (A) has a melting point of 85°C or lower as measured by differential scanning calorimetry.

3. A paint for a polyolefin substrate, comprising the aqueous dispersion of a modified polyolefin of claim 1 or 2.

4. An ink for a polyolefin substrate, comprising the aqueous dispersion of a modified polyolefin of claim 1 or 2.

5. An adhesive for a polyolefin substrate, comprising the aqueous dispersion of a modified polyolefin of claim 1 or 2.

6. A primer for a polyolefin substrate, comprising the aqueous dispersion of a modified polyolefin of claim 1 or 2.
